Europäisches Patentamt

European Patent Office

Office européen des brevets

(19)

(11) Veröffentlichungsnummer: **0 208 157**

**A1**

(12) **EUROPÄISCHE PATENTANMELDUNG**

(21) Anmeldenummer: 86107933.3

(22) Anmeldetag: 10.06.86

(51) Int.Cl.⁴: **G 06 K 7/08**

(30) Priorität: 12.06.85 DE 3521095

(43) Veröffentlichungstag der Anmeldung:
14.01.87 Patentblatt 87/3

(84) Benannte Vertragsstaaten:
AT BE CH DE FR GB IT LI LU NL SE

(71) Anmelder: Nixdorf Computer Aktiengesellschaft
Fürstenallee 7
D-4790 Paderborn(DE)

(72) Erfinder: Scholich, Peter
Wolf-Metternichstrasse 8
D-4790 Paderborn(DE)

(74) Vertreter: Patentanwälte Schaumburg & Thoenes
Mauerkircherstrasse 31 Postfach 86 07 48
D-8000 München 80(DE)

(54) Einrichtung zum Erkennen und Prüfen von Magnetschichtmedien.

(57) Eine Einrichtung zum bewegungslosen Erkennen und Prüfen von Magnetschichtmedien hat eine elektromagnetische Wandleranordnung (H) mit zwei mit Luftspalt (AG, AG') versehenen Magnetkreisen (MC, MC'). An einem der Luftspalte (AG, AG') wird das Magnetschichtmedium angeordnet. In die Magnetkreise (MC, MC') wird gleichsinnig ein Wechselstrom eingespeist, der ein der Differenz der Magnetflüsse in den Magnetkreisen (MC, MC') proportionales Signal (A) hervorruft. Dieses kann je nach seiner Amplitude in einer Auswerteschaltung (11 bis 29) als Maß für unterschiedliche Permeabilitätsbereiche des geprüften Magnetschichtmediums ausgewertet werden.

Fig. 1

## 1 Einrichtung zum Erkennen und Prüfen von Magnetschichtmedien

Die Erfindung betrifft eine Einrichtung zum Erkennen und Prüfen von Magnetschichtmedien durch an einem Luftspalt einer elektromagnetischen Wandleranordnung mit den Magnetschichtmedien hervorgerufene Magnetflußänderung.

Die Speicherung von Informationen auf Magnetschichtmedien wird u.a. bei der Personenidentifikation eingesetzt. Hierbei werden erhöhte Sicherheitsanforderungen gestellt, um einen Mißbrauch und die Fälschung von Identifikationsmitteln zu unterbinden. Ein Identifikationsmittel ist beispielsweise eine Ausweiskarte, die mit einem Magnetstreifen versehen ist, auf dem vorbestimmte Informationen gespeichert sind. Diese Informationen werden in Prüfgeräten mit einem elektromagnetischen Wandlerkopf abgetastet, der den Informationen entsprechende Induktionssignale abgibt, die dann weiter ausgewertet werden können. Im Bankwesen werden Ausweiskarten dieser Art beispielsweise zur Betätigung von Geldausgabeautomaten eingesetzt. Maschinen dieser Art enthalten Sicherheitseinrichtungen, die Unbefugten das Benutzen unmöglich machen sollen. Hierzu können besondere Sensoren, also elektromagnetische Wandlerköpfe, vorgesehen sein, die in Verbindung mit einer auf einer Ausweiskarte vorgesehenen Magnetspeicherspur zur Feststellung der seiten- und lagerichtigen Einführung einer Ausweiskarte in ein Auswertegerät dienen. Allerdings können solche Sensoren nur solche Magnetspeicherspuren auswerten, die auch eine Informationsaufzeichnung enthalten, denn sie liefern nur dann ein Induktionssignal, wenn auf der an ihnen vorbeibewegten Magnetspeicherspur ein Flußwechsel vorliegt, der durch eine Informationsaufzeichnung verursacht ist. Ausweiskarten, die eine nicht mit einer Informationsaufzeichnung versehene Magnetspeicherspur enthalten, werden somit bei dieser Prüfung zurückgewiesen.

Eine Erhöhung der Sicherheit gegen Mißbrauch von Ausweiskarten ist bereits bei deren Anfertigung zu fordern, also dann, wenn eine Ausweiskarte für einen bestimmten berechtigten Benutzer mit Informationen beschrieben werden soll. Um hier einen Mißbrauch unbeschriebener Ausweiskarten zu vermeiden, müßte ein Gerät, mit dem solche Ausweiskarten erstmalig mit Informationen beschrieben werden, eine Prüfmöglichkeit für das Vorhandensein einer unbeschriebenen Magnetspeicherspur enthalten. Darüber hinaus wäre zu fordern, daß auch eine Prüfaussage über eine bestimmte Art des Magnetschichtmediums, also eine bestimmte magnetische Permeabilität, verfügbar ist. Hierdurch könnte der betrügerische Einsatz solcher Ausweiskarten vermieden werden, die mit dem falschen Magnetschichtmedium versehen sind.

Demgemäß ist es Aufgabe der Erfindung, eine Möglichkeit zum Erkennen und Prüfen von Magnetschichtmedien anzugeben, die nicht nach dem Prinzip der Auswertung von Magnetflußänderungen in der Magnetschicht selbst arbeitet, so daß auch nicht mit Informationen beschriebene Magnetspeicherspuren erkannt werden. Darüber hinaus soll auch eine Unterscheidung verschiedener ferromagnetischer Materialien möglich sein.

Diese Aufgabe wird bei einer Einrichtung eingangs genannter Art erfindungsgemäß gelöst durch eine Wandleranordnung mit zwei luftspaltbehafteten Magnetkreisen, deren Magnetflüsse durch gleichsinniges Einspeisen eines Wechselstroms erzeugt sind, und durch eine zum Erkennen und Prüfen die Differenz der Magnetflüsse auswertende elektrische Schaltung.

Durch die Erfindung wird es möglich, beliebige ferromagnetische Stoffe zu erkennen und zwischen magnetisierten und nicht magnetisierten Materialien zu unterscheiden, und zwar unabhängig davon, auf welchem Trägermaterial diese angeordnet sind. Wenn in eine elektromagnetische Wandleranordnung mit zwei luftspaltbehafteten Magnetkreisen ein Wechselstrom gleichsinnig eingespeist wird und die Wandleranordnung ein der Differenz ihrer Magnetflüsse proportionales Signal hervorrufen kann, so entsteht ein solches Differenzsignal, wenn an einem der beiden Luftspalte ein ferromagnetisches Material angeordnet wird. Es ändert sich dann nämlich der magnetische Widerstand des zugeordneten Magnetkreises, wodurch eine Magnetflußänderung auftritt, die zu dem Differenzsignal führt. Dieses Differenzsignal entsteht also unabhängig von Magnetflußänderungen im ferromagnetischen Material selbst, so daß es auch bei stationär angeordnetem ferromagnetischem Material verfügbar ist. Wenn es als Eingangssignal einer Auswerteschaltung zugeführt wird, so kann seine Amplitude unterschiedlichen Wertbereichen zugeordnet werden, wodurch eine Aussage über die Permeabilität des ferromagnetischen Materials getroffen werden kann.

Die Differenzbildung selbst kann magnetisch durch Gegeneinanderschalten der Magnetflüsse der beiden Magnetkreise oder elektrisch durch einen Differenzverstärker erfolgen, dem die in den beiden Magnetkreisen erzeugten Induktionsspannungen zugeführt werden.

Somit kann das Vorhandensein oder Fehlen eines nicht mit Informationen beschriebenen Magnetschichtmediums auf einem Träger festgestellt und zusätzlich ein vorhandenes Material auf seine Zugehörigkeit zu einem bestimmten Permeabilitätsbereich geprüft werden. Wenn im Rahmen unterschiedlicher Auswertebereiche mit verschiedenen Auswertestromzweigen auch ein solcher vorgesehen ist, der nur bei Vorhandensein gespeicherter Informationszeichen anspricht, so ist zusätzlich auch noch eine Aussage darüber möglich, ob das erkannte und geprüfte Material mit Informationen beschrieben ist.

Eine vorteilhafte Weiterbildung der Erfindung zeichnet sich dadurch aus, daß die Auswerteschaltung zwei Auswertekanäle aufweist, deren einer für die Frequenz des Wechselstroms selektiv und deren anderer für die Frequenz gesperrt ist.

Der für die Frequenz des Wechselstroms selektive Auswertekanal dient zur Auswertung beschriebener und nicht beschriebener Magnetschichtmedien, während der für die Frequenz des Wechselstroms gesperrte Auswertekanal ausschließlich der Auswertung aufgezeichneter Informationen dient. Auf diese Weise ist die Auswerteschaltung hinsichtlich der unterschiedlichen Prüfaufgaben aufgeteilt, und an den Ausgängen der beiden Auswertekanäle können Prüfsignale abgenommen werden, die unabhängig vom jeweils anderen Signal eine eindeutige Aussage darstellen.

Wenn die Stromzweige in der Auswerteschaltung übereinstimmende Ansprechschwellen haben und mit aus dem gleichgerichteten Eingangssignal abgeleiteten entsprechend unterschiedlichen Permeabilitätsbereichen von Magnetschichtmedien unterschiedlich bemessenen Signalamplituden angesteuert sind, so wird die Auswertung des Eingangssignals von dessen absolutem Amplitudenwert unabhängig, so daß auch unabhängig von Lageänderungen des ferromagnetischen Materials an dem Wandlerkopf stets dasselbe Verhältnis zwischen dem Eingangssignal und den von ihm abgeleiteten Amplitudenwerten ausgewertet wird.

Zweckmäßig enthält dann der für die Frequenz des Wechselstroms selektive Auswertekanal eine Gleichrichterschaltung mit nachgeschaltetem RC-Zeitglied, an dessen ohmschem Widerstand die Signalamplituden zur Ansteuerung der Stromzweige abgegriffen sind. Dies ist eine besonders einfache Art der Ableitung der Signalamplituden aus dem Eingangssignal, denn an dem ohmschen Widerstand des RC-Zeitgliedes kann das gleichgerichtete Eingangssignal selbst gleichfalls abgegriffen und der Auswertung als Referenzwert zugeführt werden.

Die Auswertung des gleichgerichteten Eingangssignals erfolgt vorteilhaft mittels Komparatoren, die jeweils mit einer der Signalamplituden angesteuert sind und deren Referenzeingängen das gleichgerichtete Eingangssignal zugeführt ist. Dabei ist den Referenzeingängen der Komparatoren ein weiteres RC-Zeitglied mit gegenüber derjenigen des ersten RC-Zeitgliedes wesentlich größerer Zeitkonstante vorgeschaltet. Die unterschiedlichen Zeitkonstanten führen dazu, daß bei einer Änderung der Amplitude des Eingangssignals zwar eine entsprechende Änderung der den Komparatoren zugeführten Signalamplituden hervorgerufen wird, jedoch das den Referenzeingängen der Komparatoren zugeführte gleichgerichtete Eingangssignal selbst infolge der dort vorherrschenden größeren Zeitkonstante wesentlich langsamer geändert wird. Auf diese Weise ist die Auswertung der Signalamplituden des Eingangssignals praktisch unabhängig

- 6 -

von Amplitudenänderungen, die beispielsweise durch Lageänderungen des ferromagnetischen Materials am Luftspalt
der Wandleranordnung oder durch Toleranzen der Bauteile
hervorgerufen werden können.

Eine noch weitergehende Unabhängigkeit der auszuwertenden
Amplitude des Eingangssignals von plötzlichen Amplitudenänderungen kann dadurch erreicht werden, daß in dem Signalweg vom ersten RC-Zeitglied zu den Komparatoren der Kapazität des zweiten RC-Zeitgliedes ein Ruhekontaktschalter
vorgeschaltet ist, der durch das Ausgangssignal eines der
Komparatoren geöffnet wird. Hierdurch wird erreicht, daß
die das Eingangssignal auswertenden Komparatoren an ihren
entsprechenden Eingängen zunächst ein auszuwertendes Signal
erhalten, das nach Ansprechen eines der Komparatoren von
seiner Quelle abgeschaltet wird und in der Kapazität des
zweiten RC-Zeitgliedes gespeichert bleibt, so daß die weitere Arbeitsweise der Komparatoren unabhängig davon ist,
ob im weiteren Verlauf der Prüfung noch Amplitudenänderungen des Eingangssignals auftreten oder nicht.

Die Erfindung wird im folgenden an Hand der Figuren weiter
erläutert. Im einzelnen zeigen:

Fig. 1 eine schematische Darstellung des Prinzips
eines bei der Erfindung einzusetzenden Wandlerkopfes als Ausführungsbeispiel,

Fig. 2 das Ausführungsbeispiel einer Auswerteschaltung,

Fig. 3 Signalverläufe an verschiedenen Stellen der in

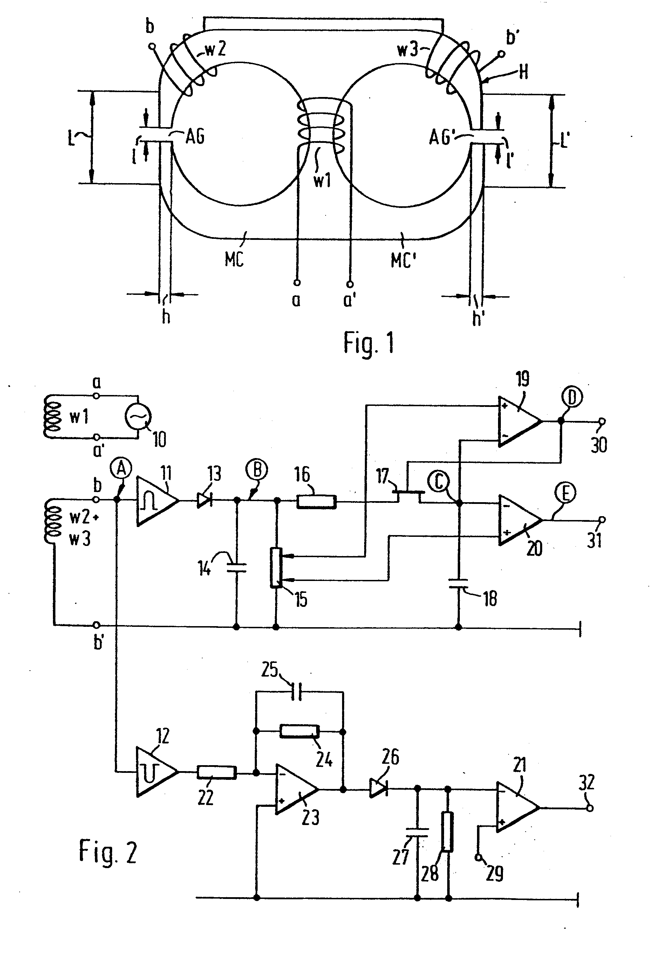

Fig. 2 gezeigten Auswerteschaltung und

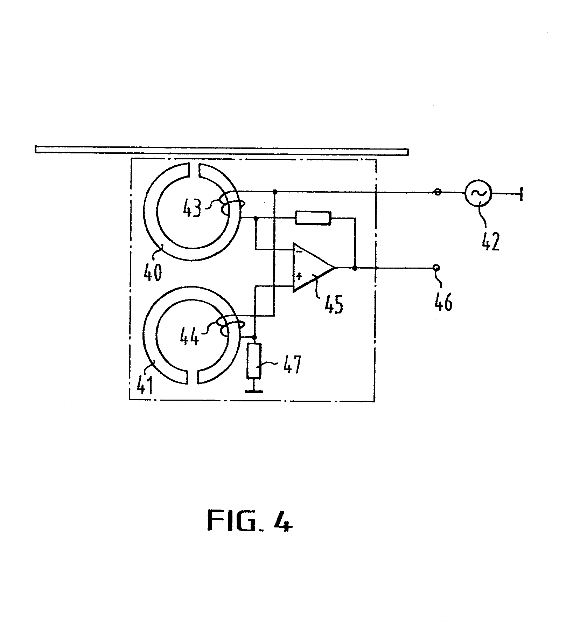

Fig. 4 eine Möglichkeit zur Differenzbildung aus zwei
Induktionssignalen.

In Fig. 1 ist ein elektromagnetischer Wandlerkopf H schematisch dargestellt, der im wesentlichen rechteckförmig ausgebildet ist und einen Magnetkern mit zwei äußeren und einem mittleren Kernschenkel hat, mit denen zwei Magnetkreise MC und MC' gebildet sind. Die äußeren Kernschenkel haben jeweils einen Luftspalt AG bzw. AG' und sind gegenüber dem mittleren Kernschenkel im Bereich der Luftspalte AG und AG' mit einer im Sinne möglichst genauer Messungen sehr geringen Höhe h bzw. h' versehen, die vorteilhaft gleich oder kleiner als die Dicke eines zu prüfenden Magnetschichtmediums ist. Diese relativ geringe Höhe h bzw. h' ist bei diesem Ausführungsbeispiel dadurch erreicht, daß die äußeren Kernschenkel in ihrem Längenabschnitt $\ell$ bzw. $\ell$' im Sinne der Rechteckform des Gesamtgebildes abgeflacht sind, während die zwischen den Kernschenkeln gebildeten Fenster eine runde Kontur haben. Die Abflachung gewährleistet auch Unabhängigkeit der Messung von einer Abnutzung des Wandlerkopfes. Die Länge $\ell$ bzw. $\ell$' der beiden Luftspalte AG und AG' liegt vorteilhaft in der Größenordnung von ca. 30 μm, wenn mit dem Wandlerkopf H nicht nur ein Erkennen nicht magnetisierten ferromagnetischen Materials, sondern auch das Erkennen gespeicherter Informationen möglich sein soll. Die Länge $\ell$ bzw. $\ell$' des jeweiligen Luftspaltes AG bzw. AG' ist dann der Aufzeichnungsdichte des jeweiligen Aufzeichnungsverfahrens angepaßt. Da die Länge $\ell$ bzw. $\ell$' der Luftspalte AG und AG' für das Erkennen nicht beschriebener Magnetspeicherspuren unkritisch ist, kann sie aber jeder gewünschten Aufzeichnungsdichte angepaßt werden. Unter Beachtung der vorstehenden Kriterien kann der Wandlerkopf auch andere Formen haben und beispielsweise mit eckigen Fenstern bzw. Magnetkreisen versehen sein.

Der Wandlerkopf H trägt auf seinem mittleren Kernschenkel eine Induktionswicklung w1 mit Wicklungsenden a und a' und auf seinen äußeren Kernschenkeln jeweils eine Induktionswicklung w2 bzw. w3. Diese beiden Induktionswicklun-

- 8 -

0208157

gen w2 und w3 sind gleichsinnig in Reihe geschaltet, so daß sie zwei Wicklungsenden b und b' haben.

Wenn in die Induktionswicklung wl ein Wechselstrom über deren Wicklungsenden a und a' eingespeist wird, so erzeugt dieser einen Magnetfluß in dem mittleren Kernschenkel, der sich auf die äußeren Kernschenkel verteilt und dort elektrische Spannungen in den Induktionswicklungen w2 und w3 induziert, die infolge des symmetrischen Aufbaus und der entsprechenden symmetrischen Aufteilung der Magnetflüsse praktisch übereinstimmende Amplituden haben. An den Wicklungsenden b und b' tritt dann keine Induktionsspannung auf, weil sich die beiden in den Induktionswicklungen w2 und w3 induzierten Spannungen gegenseitig aufheben.

Die Anordnung ist umkehrbar, denn wenn ein Wechselstromsignal über die Wicklungsenden b und b' in die Reihenschaltung der Induktionswicklungen w2 und w3 eingespeist wird, so werden zwei Magnetflüsse in den äußeren Kernschenkeln erzeugt, die so gerichtet sind, daß sie sich im mittleren Kernschenkel gegenseitig aufheben, so daß dann an der Induktionswicklung wl keine Spannung induziert wird.

Diese symmetrischen Verhältnisse werden dann gestört, wenn sich der magnetische Widerstand eines der Magnetkreise MC und MC' ändert. Eine solche Änderung kann dadurch hervorgerufen werden, daß an einem der Luftspalte AG und AG' ein ferromagnetisches Material angeordnet wird, welches diesen Luftspalt überbrückt. Durch den so erzeugten Unterschied der magnetischen Widerstände der Magnetkreise MC und MC' kann dann bei Einspeisung des Wechselstroms zum Beispiel an der Induktionswicklung wl an der Reihenschaltung der Induktionswicklungen w2 und w3 ein Differenzsignal auftreten, welches also durch sein Erscheinen das Kriterium dafür ist, daß ein ferromagnetisches Material am Wandlerkopf H anliegt und durch seine Amplitude eine Aussage über die Permeabilität dieses ferromagnetischen Materials ermöglicht.

Fig. 2 zeigt eine Schaltungsanordnung, mit der das Differenzsignal ausgewertet werden kann. Schematisch ist die Induktionswicklung w1 mit den Wicklungsenden a und a' dargestellt, an die ein Wechselstromgenerator 10 angeschlossen ist. Außerdem ist eine mit w2+w3 bezeichnete Induktionswicklung dargestellt, die an ihren Wicklungsenden b und b' das an Hand der Fig. 1 beschriebene Differenzsignal abgibt. Dieses Differenzsignal hat beispielsweise den in Fig. 3a dargestellten Verlauf, der im folgenden noch ausführlicher beschrieben wird.

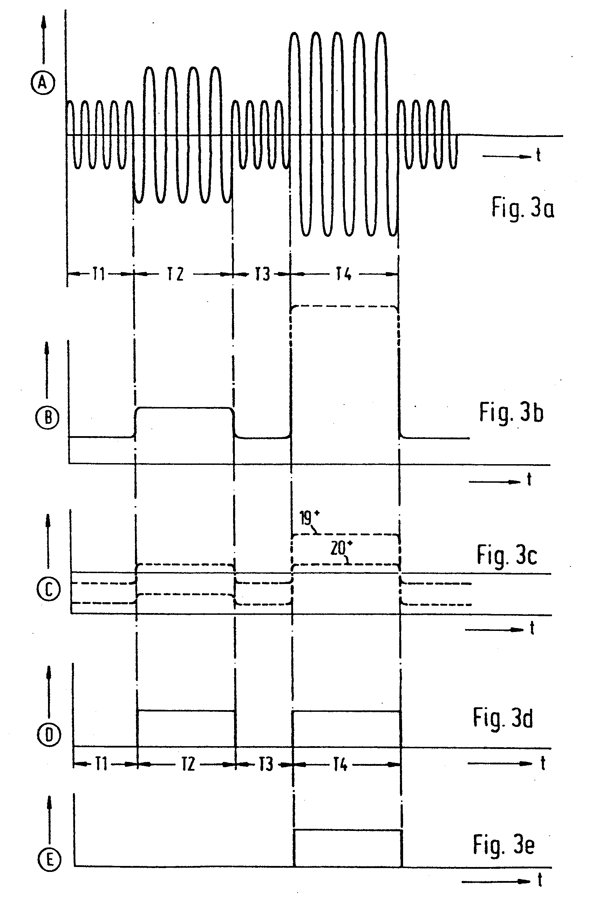

Die in Fig. 2 gezeigte Auswerteschaltung hat zwei Auswertekanäle, denen das an den Wicklungsenden b und b' erscheinende Differenzsignal als Eingangssignal zugeführt wird. Diese Auswertekanäle unterscheiden sich dadurch, daß der eine für die Frequenz des mit dem Wechselstromgenerator 10 erzeugten Wechselstromsignals selektiv ist, während der andere gegenüber dieser Frequenz gesperrt ist. Hierzu ist für den ersten Auswertekanal ein Selektivfilter 11 und für den zweiten Auswertekanal ein Sperrfilter 12 vorgesehen. Dem Selektivfilter 11 ist ein Gleichrichter 13 nachgeschaltet, durch den das Differenzsignal gleichgerichtet wird und als pulsierende Gleichspannung dann an einem RC-Zeitglied mit einer Kapazität 14 und einem ohmschen Widerstand 15 geglättet wird. Hier hat das gleichgerichtete Induktionssignal dann den in Fig. 3b dargestellten Verlauf B, der noch erläutert wird.

Auf das Zeitglied 14/15 folgt ein weiteres Zeitglied mit einem ohmschen Widerstand 16 und einer Kapazität 18, die über die Schaltstrecke eines Feldeffekttransistors 17 miteinander verbunden sind. Das Zeitglied 16/18 hat eine wesentlich größere Zeitkonstante als das Zeitglied 14/15. Die an der Kapazität 18 des Zeitgliedes 16/18 erscheinende Gleichspannung wird den invertierenden Eingängen zweier Komparatoren 19 und 20 zugeführt und hat den in Fig. 3c dargestellten Verlauf C. Die nicht invertierenden Eingänge dieser beiden Komparatoren 19 und 20 erhalten jeweils eine Gleichspannung, die an dem ohmschen Widerstand 15 des Zeitgliedes 14/15 abgegriffen ist. Diese Spannung ist also jeweils abhängig von der Amplitude der an dem ohmschen Widerstand 15 abfallenden Gleichspannung, also von der Amplitude des Induktionssignals. Der ohmsche Widerstand 15 ist als Regelwiderstand ausgebildet, so daß die den nicht invertierenden Eingängen der beiden Komparatoren 19 und 20 zugeführten Spannungen auf unterschiedliche Werte eingestellt werden können.

Der Feldeffekttransistor 17 arbeitet als Schalttransistor und kann durch ein Ausgangssignal am Komparator 19 gesperrt werden, wodurch dann der Signalweg vom ohmschen Widerstand 16 zur Kapazität 18 aufgetrennt wird.

Die Ausgangssignale der Komparatoren 19 und 20 haben den in Fig. 3c bzw. 3d dargestellten Verlauf D bzw. E und werden über Schaltungsausgänge 30 und 31 einer weiteren Nutzung zugeführt.

Hinter dem Sperrfilter 12 treten nur Signale auf, die auf das Vorhandensein gespeicherter Informationen auf dem geprüften Magnetschichtmedium zurückzuführen sind. Diese Signale werden über einen Vorwiderstand 22 einem mit Wi-

- 11 -

0208157

derstand 24 und Kapazität 25 gegengekoppelten Verstärker 23 zugeführt und anschließend mit einem Gleichrichter 26 gleichgerichtet. Dem Gleichrichter 26 ist ein Zeitglied mit einer Kapazität 27 und einem ohmschen Widerstand 28 zur Glättung nachgeschaltet, und die so erzeugte, aus geschriebenen Informationen abgeleitete Gleichspannung wird dem invertierenden Eingang eines Komparators 21 zugeführt, dessen nicht invertierender Eingang mit einer festen Referenzspannung 29 verbunden ist. Der gegengekoppelte Verstärker 23 hat eine Tiefpaßfunktion und dient somit zur Verbesserung der in diesem Auswertekanal ausgewerteten Signale. Es ist darauf hinzuweisen, daß das Sperrfilter 12 gegebenenfalls fehlen kann, wenn ein ausreichend großer Unterschied der aus den geschriebenen Informationen abgeleiteten Signale gegenüber dem in dem zuvor beschriebenen Auswertekanal ausgewerteten Induktionssignal vorliegt.

Das Ausgangssignal des Komparators 21 erscheint an einem Schaltungsausgang 32 und kann von dort einer weiteren Nutzung in Verbindung mit den Signalen an den Ausgängen 30 und 31 zugeführt werden.

In Fig. 3a ist ein Signalverlauf A über der Zeit dargestellt, der an dem in Fig. 2 entsprechend bezeichneten Schaltungspunkt A auftritt und das Induktionssignal wiedergibt, welches an dem in Fig. 1 gezeigten Wandlerkopf bei Anliegen ferromagnetischer Materialien an einem der Luftspalte AG und AG' auftritt. In Fig. 3a sind vier unterschiedliche Zeitabschnitte T1 bis T4 gezeigt, während derer unterschiedliche Zustände an einem Wandlerkopf der in Fig. 1 gezeigten Art vorliegen können. So zeigen die Zeitabschnitte T1 und T3 eine relativ kleine Amplitude des Signalverlaufs A, die dann gegeben ist, wenn kein ferromagnetisches Material an dem Wandlerkopf H (Fig. 1) anliegt und deren endlicher Wert darauf zurückzuführen ist, daß dieser Wandlerkopf H nicht ideal symmetrisch aufgebaut ist. Der Zeitabschnitt T2 zeigt eine größere Signalamplitude, die darauf zurückzuführen ist, daß ein Träger eines Magnetschichtmediums an einem der Luftspalte AG und AG' des Wandlerkopfes H angeordnet ist. Der Zeitabschnitt T4 zeigt schließlich eine übergroße Signalamplitude, die darauf zurückzuführen ist, daß ein ferromagnetisches Material mit höherer Permeabilität als zuvor das Magnetschichtmedium an dem betreffenden Luftspalt angeordnet ist.

Die Darstellung in Fig. 3a ist nicht maßstabsgerecht und entspricht somit nicht den tatsächlichen Verhältnissen, bei denen die Signalamplitude zum Zeitabschnitt T4 um mehrere Zehnerpotenzen größer als zum Zeitabschnitt T2 ist. Diese Darstellung dient lediglich zur Verdeutlichung der prinzipiellen Vorgänge an einem Wandlerkopf der in Fig. 1 gezeigten Art.

In Fig. 3b ist der Signalverlauf B dargestellt, wie er in der Auswerteschaltung nach Fig. 2 hinter dem Gleichrichter 13 an dem Schaltungspunkt B auftritt. Durch die Gleichrichtung ergibt sich ein Signalverlauf, der dem oberen Teil der Hüllkurve des in Fig. 3a gezeigten Signalverlaufs A entspricht.

Fig. 3c zeigt den Signalverlauf C an dem in Fig. 2 gezeigten Kondensator 18, der an den invertierenden Eingängen der beiden Komparatoren 19 und 20 liegt. Es handelt sich dabei um eine praktisch konstante Spannung, deren Wert den Ruhewert der gleichgerichteten Spannung B hat und die Referenzspannung für die Komparatoren 19 und 20 ist. Sie behält ihren Wert auch bei einer Änderung des Induktionssignals A, da das Zeitglied 16/18 die beschriebene lange Zeitkonstante hat und der Feldeffekttransistor 17 die invertierenden Eingänge der Komparatoren 19 und 20 von dem Schaltungseingang abtrennt, wenn der Komparator 19 anspricht.

Fig. 3c zeigt außerdem gestrichelt die beiden Spannungen $19^+$ und $20^+$, die den nicht invertierenden Eingängen der Komparatoren 19 und 20 zugeführt werden und an dem Regelwiderstand 15 abgegriffen sind. Sie haben unterschiedliche Amplituden, jedoch einen dem Verlauf des Signals B analogen Verlauf.

Die beiden Spannungen $19^+$ und $20^+$ sind so bemessen, daß während des Zeitabschnitts T2 nur die Spannung $19^+$, während des Zeitabschnitts T4 aber beide Spannungen $19^+$ und $20^+$ die Referenzspannung C überschreiten. Auf diese Weise ist es möglich, durch entsprechende Ausgangssignale der Komparatoren 19 und 20 Materialien unterschiedlicher Größenordnung der Permeabilität zu unterscheiden. Während des Zeitabschnitts T2 gibt nur der Komparator 19 ein Ausgangssignal ab, während des Zeitabschnitts T4 aber beide Komparatoren 19 und 20. Diese Ausgangssignale sind in Fig. 3d und 3e als Signalverläufe D und E dargestellt.

Da die Differenz der beiden Spannungen $19^+$ und $20^+$ relativ groß bemessen werden kann, ist es möglich, einen Wandlerkopf zur Erzeugung des Induktionssignals zu verwenden, der relativ große Fertigungstoleranzen hat.

Es ist zu erkennen, daß mit den Komparatoren 19 und 20 an den Schaltungsausgängen 30 und 31 der in Fig. 2 gezeigten Auswerteschaltung Signale abgegeben werden können, die mehrere Auswertemöglichkeiten zulassen. Zusätzlich kann zu jeder dieser Auswertemöglichkeiten noch eine Aussage

- 14 -

0208157

darüber getroffen werden, ob eine Informationsaufzeichnung vorliegt oder nicht, wozu das an dem Schaltungsausgang 32 der in Fig. 2 gezeigten Auswerteschaltung auftretende Signal herangezogen wird. Insgesamt ergeben sich dann die in der folgenden Tabelle zusammengestellten Auswertemöglichkeiten:

| Ausgänge | | | Material |
|---|---|---|---|
| 30 | 31 | 32 | |
| 1 | 0 | 0 | kleine Permeabilität, keine Informationen |
| 1 | 1 | 0 | große Permeabilität, keine Informationen |
| 1 | 0 | 1 | kleine Permeabilität, Informationen |
| 1 | 1 | 1 | große Permeabilität, Informationen |
| 0 | 0 | 0 | kein Fe-Material |

Mit der vorstehend erläuterten Einrichtung ist es möglich, ein ferromagnetisches Material festzustellen, dessen Permeabilität einen ersten Mindestwert überschreitet, der an dem Widerstand 15 (Fig. 2) eingestellt werden kann. Außerdem kann ein ferromagnetisches Material festgestellt werden, welches einen an dem Widerstand 15 einstellbaren zweiten, höheren Wert überschreitet. Schließlich kann zusätzlich das Vorhandensein gespeicherter Informationen festgestellt werden.

Es ist darauf hinzuweisen, daß der Wechselstromgenerator 10 ein Wechselstromsignal so geringer Stromstärke liefern sollte, daß keine entsprechenden magnetischen Aufzeichnungen auf dem zu prüfenden Magnetschichtmedium erzeugt werden.

In der in Fig. 2 gezeigten Auswerteschaltung kann der Feldeffekttransistor 17 gegebenenfalls entfallen, wenn die Zeit, während der ein Magnetschichtmedium geprüft wird, in der Größenordnung von weniger als 1 Sekunde liegt. In diesem Fall ist die den Komparatoren 19 und 20 zugeführte gleichgerichtete Spannung ausreichend konstant, um den vorstehend beschriebenen Effekt zu erzielen.

Ein Wandlerkopf, wie er bei der Erfindung zur Abgabe des Induktionssignals verwendet wird, kann auch eine definierte Unsymmetrie haben, wodurch es möglich ist, die Richtung der mit einem zu prüfenden Magnetschichtmedium hervorgerufenen Signaländerung festzulegen. Da im Hinblick auf unvermeidbare Fertigungstoleranzen eine vollständige Gleichheit der die Wicklungen w2 und w3 durchsetzenden Magnetflüsse praktisch nicht erreicht wird, kann trotz weitgehender Symmetrie des Wandlerkopfes nicht vorhergesehen werden, welches Vorzeichen die Änderung des Induktionssignals hat. Wenn nun eine definierte Unsymmetrie vorgesehen wird, beispielsweise durch ungleiche Windungszahlen der Wicklungen w2 und w3, durch unterschiedlich bemessene Luftspalte AG und AG' oder durch unterschiedlich bemessene Magnetkreise MC und MC', so kann eine immer gleichgerichtete Signaländerung ausgewertet werden.

Fig. 4 zeigt eine elektrische Differenzbildung mit den Induktionssignalen zweier Magnetkreise 40 und 41, in die gleichsinnig ein Wechselstrom aus einem Generator 42 eingespeist wird, wozu jeder Magnetkreis 40 und 41 mit einer Wicklung 43 bzw. 44 versehen ist. Ein Differenzverstärker dient zur Differenzbildung und gibt das Differenzsignal an seinen Ausgang 46 ab. Die beiden Wicklungen 43 und 44 sind einander parallelgeschaltet, und ihre in Fig. 4 unteren Enden sind mit dem invertierenden bzw. nicht invertierenden Eingang des Differenzverstärkers 45 verbunden. Der Wechselstrom fließt von dem Generator 42 einerseits über die Wicklung 43 und die Eingänge des Differenzverstärkers 45, andererseits über die Wicklung 44 zu einem Widerstand 47 und über diesen zurück zum Generator 42.

Patentansprüche

1. Einrichtung zum Erkennen und Prüfen von Magnetschichtmedien durch an einem Luftspalt einer elektromagnetischen Wandleranordnung mit den Magnetschichtmedien hervorgerufene Magnetflußänderung, g e k e n n z e i c h -
n e t durch eine Wandleranordnung (H) mit zwei luftspaltbehafteten Magnetkreisen (MC, MC'), deren Magnetflüsse durch gleichsinniges Einspeisen eines Wechselstroms
erzeugt sind, und durch eine zum Erkennen und Prüfen die
Differenz der Magnetflüsse auswertende elektrische Schaltung (11 bis 29).

2. Einrichtung nach Anspruch 1, dadurch g e k e n n z e i c h -
n e t , daß eine Auswerteschaltung (11 bis 29) mit mehreren zueinander parallelen Stromzweigen (19, 20) vorgesehen
ist, die entsprechend unterschiedlichen Amplitudenbereichen ihres Eingangssignals ansteuerbar sind.

3. Einrichtung nach Anspruch 1 oder 2, dadurch g e k e n n -
z e i c h n e t , daß die Auswerteschaltung (11 bis 29) zwei
Auswertekanäle (11, 12) aufweist, deren einer (11) für die
Frequenz des Wechselstroms selektiv und deren anderer (12)
für diese Frequenz gesperrt ist.

4. Einrichtung nach Anspruch 3, dadurch g e k e n n z e i c h -
n e t , daß der für die Frequenz des Wechselstroms selektive Kanal zwei parallele Stromzweige genannter Art aufweist.

5. Einrichtung nach einem der Ansprüche 2 bis 4, dadurch g e k e n n z e i c h n e t , daß die Stromzweige übereinstimmende Ansprechschwellen haben und mit aus dem gleichgerichteten Eingangssignal (B) abgeleiteten, entsprechend unterschiedlichen Permeabilitätsbereichen von Magnetschichtmedien unterschiedlich bemessenen Signalamplituden angesteuert sind.

6. Einrichtung nach Anspruch 5, dadurch g e k e n n z e i c h n e t , daß der für die Frequenz des Wechselstroms selektive Auswertekanal (11) eine Gleichrichterschaltung (13) mit nachgeschaltetem RC-Zeitglied (14, 15) enthält, an dessen ohmschem Widerstand (15) die Signalamplituden zur Ansteuerung der Stromzweige abgegriffen sind.

7. Einrichtung nach Anspruch 6, dadurch g e k e n n z e i c h n e t , daß die Signalamplituden jeweils auf einen Eingang eines Komparators (19, 20) geführt sind, dessen Referenzeingang mit dem gleichgerichteten, an dem RC-Zeitglied (14, 15) erscheinenden Eingangssignal (B) angesteuert ist.

8. Einrichtung nach Anspruch 7, dadurch g e k e n n z e i c h n e t , daß den Referenzeingängen der Komparatoren (19, 20) ein weiteres RC-Zeitglied (16, 18) mit gegenüber derjenigen des ersten RC-Zeitgliedes (14, 15) wesentlich größerer Zeitkonstante vorgeschaltet ist.

9. Einrichtung nach Anspruch 8, dadurch g e k e n n z e i c h n e t , daß in dem Signalweg vom ersten RC-Zeitglied (14, 15) zu den Komparatoren (19, 20) der Kapazität (18) des zweiten RC-Zeitgliedes (16, 18) ein Ruhekontaktschalter (17) vorgeschaltet ist, der durch das Ausgangssignal (C) eines der Komparatoren (19, 20) geöffnet wird.

10. Einrichtung nach einem der vorhergehenden Ansprüche, dadurch gekennzeichnet, daß der für die Frequenz des Wechselstroms gesperrte Auswertekanal (12) eine Gleichrichterschaltung (26) mit nachgeschaltetem Zeitglied (27, 28) enthält und daß eine an dem Zeitglied (27, 28) auftretende Gleichspannung mit einer vorgegebenen Referenzspannung (29) verglichen wird.

11. Einrichtung nach einem der vorhergehenden Ansprüche, dadurch gekennzeichnet, daß die Wandleranordnung (H) einen die Magnetkreise (MC, MC') bildenden Kern mit drei miteinander parallel verbundenen Kernschenkeln aufweist, die jeweils eine Induktionswicklung (w1, w2, w3) tragen und von denen zwei mit einem Luftspalt (AG, AG') versehen sind.

12. Einrichtung nach Anspruch 11, dadurch gekennzeichnet, daß die Induktionswicklungen (w2, w3) der mit einem Luftspalt (AG, AG') versehenen Kernschenkel miteinander in Reihe geschaltet sind.

13. Einrichtung nach Anspruch 11 oder 12, dadurch gekennzeichnet, daß der die Magnetkreise (MC, MC') bildende Kern etwa rechteckförmig mit in einer gemeinsamen Ebene liegenden Kernschenkeln ausgebildet ist und daß die Luftspalte in den Schmalseiten der Rechteckform mit einer Länge ($l$, $l$') von etwa 30 µm und einer Höhe (h, h') ausgebildet sind, die in der Größenordnung der Dicke zu prüfender Magnetschichtmedien liegt.

14. Einrichtung nach einem der Ansprüche 11 bis 13, dadurch gekennzeichnet, daß die Wandleranordnung (H) eine vorgegebene Unsymmetrie ihrer Induktionswicklungen (w1, w2, w3) oder ihrer Magnetkreise (MC, MC') aufweist.

Fig. 1

Fig. 2

0208157

Fig. 3a

Fig. 3b

Fig. 3c

Fig. 3d

Fig. 3e

FIG. 4

<table>
<tr><td>Europäisches Patentamt</td><td>EUROPÄISCHER RECHERCHENBERICHT</td><td>Nummer der Anmeldung<br>EP 86 10 7933</td></tr>
</table>

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | US-A-4 130 242 (MANNION)<br><br>* Figuren 2,6; Spalte 4, Zeile 34 - Spalte 5, Zeile 60 *<br><br>--- | 1,11, 12 | G 06 K 7/08 |
| Y | US-A-3 048 666 (R.G. NEVILLE)<br><br>* Figuren 1,2; Spalte 1, Zeile 51 - Spalte 2, Zeile 7 *<br><br>--- | 1,11, 12 | |
| A | US-A-4 281 242 (MANNION)<br>* Figuren 1-3; Spalte 3, Zeile 7 - Spalte 6, Zeile 35 *<br><br>--- | 1 | |
| A | GB-A-1 534 859 (DE LA RUE CROSFIELD)<br>* Figur 4; Seite 2, Zeile 117 - Seite 3, Zeile 78 *<br><br>--- | 1,2 | |
| A | US-A-3 225 145 (H.R. WARREN)<br>* Figur 1; Spalte 3, Zeile 37 - Spalte 5, Zeile 10 *<br><br>----- | 1 | RECHERCHIERTE SACHGEBIETE (Int. Cl.4)<br><br>G 06 K<br>G 11 B |

Der vorliegende Recherchenbericht wurde für alle Patentansprüche erstellt.

| Recherchenort | Abschlußdatum der Recherche | Prüfer |
|---|---|---|
| DEN HAAG | 27-10-1986 | GYSEN L.A.D. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82